# EUROPEAN PATENT APPLICATION

(11) **EP 4 830 533 A1**
(43) Date of publication of application: **28.10.2026**
(21) Application number: 24906831.3
(22) Date of filing: 29.08.2024
(51) Int. Cl.: A23L 2/52, A23F 3/16, A23F 5/24, A23L 2/38, A23L 33/135

(54) **BEVERAGE, METHOD FOR PRODUCING SAME, AND METHOD FOR MASKING UNPLEASANT ODOR OF BEVERAGE**

(30) Priority: 22.12.2023 JP 2023217356
(71) Applicant: KIRIN HOLDINGS KABUSHIKI KAISHA, Nakano-ku, Tokyo 164-0001 (JP)
(72) Inventor: GOTO, Takeaki, Tokyo 164-0001 (JP); KUMATA, Noriko, Tokyo 164-0001 (JP)
(74) Representative: Hoffmann Eitle
(86) International application number: PCT/JP2024/031077
(87) International publication number: WO 2025/134441

(57) **Abstract**

A beverage contains beneficial bacteria. In the beverage, a dead bacteria concentration of the beneficial bacteria is 5 × 10⁸/L or more and a concentration of a pyrazine is 1 ppb or more.

## Description

### TECHNICAL FIELD

The present disclosure relates to a beverage, a method of producing the same, and a method of masking an off-odor of a beverage.

### BACKGROUND

Essential ingredients contained in foods and beverages and additive ingredients that are intentionally added in order to display a certain effect often have distinctive odors. Various studies have been conducted with the aim of masking such distinctive odors (for example, refer to Patent Literature (PTL) 1 to 3).

Moreover, the need for functional foods is increasing year by year due to heightened health consciousness. In particular, beneficial bacteria, and more specifically lactic acid bacteria can be expected to have health benefits such as improving gut microbiota and boosting immune function, and various foods having lactic acid bacteria added thereto are being developed. However, loss of product palatability is a concern because lactic acid bacteria have an odor and flavor caused by volatile compounds that are produced in a fermentation process of the bacteria, and this odor and flavor may be perceived as a disagreeable off-taste by some consumers.

In order to solve this problem of off-taste, PTL 4, for example, studies a masking agent for an off-taste originating from lactic acid fermentation in foods and beverages containing lactic acid bacteria. Specifically, PTL 4 proposes a masking agent for an off-taste of lactic acid bacteria-containing foods and beverages that contains a triglyceride including a medium-chain fatty acid as an active ingredient.

As another example, PTL 5 studies an off-taste masking agent for masking an off-taste originating from lactic acid bacteria in a lactic acid bacteria-containing beverage. Specifically, PTL 5 proposes an off-taste masking agent that contains calcium and/or magnesium as an active ingredient.

### CITATION LIST

### Patent Literature

PTL 1: JP 2022-73194 A
PTL 2: JP 2021-90371 A
PTL 3: WO 2012/011402 A1
PTL 4: JP 2021-023294 A
PTL 5: JP 2017-209090 A

### SUMMARY

### (Technical Problem)

However, conventional methods of masking an off-taste do not have a universal effect, which makes it necessary to develop a specific masking method for each type of off-odor. These methods are also limited in terms of effect, and further improvement is desirable. Accordingly, an object of the present disclosure is to provide a beverage in which a distinctive off-odor of beneficial bacteria is more effectively masked.

### (Solution to Problem)

The inventors conducted diligent studies with the aim of solving the problem described above. The inventors reached a new discovery that although the influence of an off-odor of beneficial bacteria in a beverage increases in a situation in which dead bacteria of beneficial bacteria are blended in a specific concentration, it is possible to effectively mask the off-odor of the beneficial bacteria in the beverage by providing a specific aroma ingredient in a specific concentration together therewith, and, in this manner, the inventors completed the present disclosure.

Specifically, with the aim of advantageously solving the problem described above, a presently disclosed beverage is [1] a beverage comprising dead bacteria of beneficial bacteria, wherein a dead bacteria concentration of the beneficial bacteria is 5 × 10⁸/L or more, and a pyrazine is included in a concentration of 1 ppb or more. In a beverage having a composition such as set forth above, a distinctive off-odor of beneficial bacteria is masked.

[2] In the beverage according to the foregoing [1], the dead bacteria concentration of the beneficial bacteria is preferably 20,000 × 10⁸/L or less.

[3] In the beverage according to the foregoing [1] or [2], the beneficial bacteria are preferably one type or two or more types selected from the group consisting of Lactobacillus bacteria and Lactococcus bacteria.

[4] In the beverage according to any one of the foregoing [1] to [3], the beneficial bacteria are preferably one type or two or more types selected from the group consisting of Lactobacillus rhamnosus CRL1505, Lactococcus lactis subsp. lactis JCM5805, and Lactobacillus paracasei KW3110.

[5] In the beverage according to any one of the foregoing [1] to [4], the concentration of the pyrazine is preferably 40,000 ppb or less.

[6] In the beverage according to any one of the foregoing [1] to [5], the concentration of the pyrazine and the dead bacteria concentration of the beneficial bacteria preferably satisfy relationship formula (1), shown below: $\begin{matrix}pyrazine concentration \left(ppb\right) \geq 0.0009 \times dead bacteria concentration of \\ beneficial bacteria \left(\times {10}^{8}/L\right) + 0.9\end{matrix}$ (1).

[7] In the beverage according to any one of the foregoing [1] to [6], the pyrazine preferably includes at least one of 2-methylpyrazine, 2,5-dimethylpyrazine, and 2,6-dimethylpyrazine.

[8] The beverage according to any one of the foregoing [1] to [7] is preferably any one of a coffee beverage, a green tea beverage, a black tea beverage, and a grain tea beverage.

[9] The beverage according to any one of the foregoing [1] to [8] is preferably a packaged beverage.

[10] Moreover, a presently disclosed method of producing a beverage is a method of producing a beverage that contains dead bacteria of beneficial bacteria, the method comprising a blending step of blending the dead bacteria of the beneficial bacteria and a pyrazine, wherein the blending is performed such that a dead bacteria concentration of the beneficial bacteria is 5 × 10⁸/L or more and a concentration of the pyrazine is 1 ppb or more. Through this production method, it is possible to produce a beverage in which a distinctive off-odor of beneficial bacteria is effectively masked.

[11] Furthermore, the method of producing a beverage according to the foregoing [10] preferably comprises a heat treatment step of heat treating a blend obtained through the blending step.

[12] Also, a presently disclosed method of masking an off-odor is a method of masking an off-odor of a beverage that contains dead bacteria of beneficial bacteria, the method comprising a blending step of blending the dead bacteria of the beneficial bacteria and a pyrazine, wherein the blending is performed such that a dead bacteria concentration of the beneficial bacteria is 5 × 10⁸/L or more and a concentration of the pyrazine is 1 ppb or more. Through this method of masking an off-odor, it is possible to effectively mask an off-odor of beneficial bacteria.

[13] The method of masking an off-odor according to the foregoing [12] preferably comprises a heat treatment step of heat treating a blend obtained through the blending step.

### (Advantageous Effect)

According to the present disclosure, it is possible to provide a beverage in which a distinctive off-odor of beneficial bacteria is masked.

### DETAILED DESCRIPTION

### (Beverage)

The presently disclosed beverage is a beverage that contains dead bacteria of beneficial bacteria. Features of the presently disclosed beverage are that a dead bacteria concentration of the beneficial bacteria is 5 × 10⁸/L or more and that a pyrazine is included in a concentration of 1 ppb or more. Moreover, the presently disclosed beverage has masking of a distinctive off-odor of beneficial bacteria and has excellent flavor.

The "beverage containing dead bacteria of beneficial bacteria" referred to in the present disclosure encompasses "lactic acid bacteria beverages" defined in the "Ministerial Ordinance on Milk and Milk products Concerning Composition Standards, etc." (hereinafter, referred to as the "Ordinance on Milk, etc."). However, the "beverage containing dead bacteria of beneficial bacteria" referred to in the present disclosure is not limited to lactic acid bacteria beverages in accordance with the definition in the Ordinance on Milk, etc. so long as it contains beneficial bacteria, even when the beneficial bacteria are bacteria other than lactic acid bacteria. For example, the "beverage containing dead bacteria of beneficial bacteria" may be a milk beverage in accordance with the definition in the Ordinance on Milk, etc. or may be a soft drink such as fruit juice, vegetable juice, soymilk, a tea beverage, or a coffee beverage, but is more preferably any one of a coffee beverage, a green tea beverage (preferably a roasted green tea beverage), a black tea beverage, or a grain tea beverage (preferably a barley tea beverage), more preferably any one of a coffee beverage, a roasted green tea beverage, and a barley tea beverage, and even more preferably a coffee beverage.

The term "distinctive off-odor of beneficial bacteria" as used in the present specification refers to the distinctive odor originating from the addition of beneficial bacteria.

### <Dead bacteria of beneficial bacteria>

In the present disclosure, dead bacteria of beneficial bacteria are used. No specific limitations are placed on the beneficial bacteria, and examples thereof include Oenococcus bacteria, Bifidobacterium bacteria, Weissella bacteria, Tetragenococcus bacteria, Lactococcus bacteria, Leuconostoc bacteria, Pediococcus bacteria, Streptococcus bacteria, Enterococcus bacteria, Lactobacillus bacteria, acetic acid bacteria, and Bacillus bacteria.

Note that the term "Lactobacillus bacteria" as used in the present disclosure encompasses bacteria that were classified as Lactobacillus prior to the Lactobacillus reclassification. For example, "Lactobacillus bacteria" encompasses bacteria that, in accompaniment to the Lactobacillus reclassification, were newly classified as Acetilactobacillus, Agrilactobacillus, Amylolactobacillus, Apilactobacillus, Bombilactobacillus, Companilactobacillus, Dellaglioa, Fructilactobacillus, Furfurilactobacillus, Holzapfelia, Lacticaseibacillus, Lactiplantibacillus, Lapidilactobacillus, Latilactobacillus, Lentilactobacillus, Levilactobacillus, Ligilactobacillus, Limosilactobacillus, Liquorilactobacillus, Loigolactobacillus, Paralactobacillus, Paucilactobacillus, Schleiferilactobacillus, Secundilactobacillus, and so forth.

Of the examples given above, Oenococcus bacteria, Bifidobacterium bacteria, Lentilactobacillus bacteria, Weissella bacteria, Tetragenococcus bacteria, Lactococcus bacteria, Leuconostoc bacteria, Pediococcus bacteria, Enterococcus bacteria, Lactobacillus bacteria, and Lactiplantibacillus bacteria are preferable as the beneficial bacteria. Moreover, it is more preferable that one type or two or more types selected from the group consisting of Lactobacillus bacteria and Lactococcus bacteria are included as the beneficial bacteria.

The Oenococcus bacteria mentioned above may be Oenococcus oeni or the like, for example. Specific examples of Oenococcus bacteria include Oenococcus oeni JCM6125.

The Bifidobacterium bacteria mentioned above may be Bifidobacterium animalis subsp. lactis, Bifidobacterium longum subsp. infantis, or the like, for example. Specific examples of Bifidobacterium bacteria include Bifidobacterium animalis subsp. lactis JCM10602 and Bifidobacterium longum subsp. infantis JCM1222.

The Weissella bacteria mentioned above may be Weissella paramesenteroides, Weissella viridescens, or the like, for example. Specific examples of Weissella bacteria include Weissella paramesenteroides JCM9890 and Weissella viridescens JCM1174.

The Tetragenococcus bacteria mentioned above may be Tetragenococcus halophilus or the like, for example. Specific examples of Tetragenococcus bacteria include Tetragenococcus halophilus NRIC0098.

The Lactococcus bacteria mentioned above may be Lactococcus lactis, Lactococcus lactis subsp. lactis, Lactococcus garvieae, Lactococcus lactis subsp. cremoris, Lactococcus lactis subsp. hordniae, Lactococcus plantarum, or the like, for example.

Specific examples of Lactococcus bacteria include Lactococcus lactis subsp. lactis JCM5805, Lactococcus lactis subsp. lactis NBRC12007, Lactococcus lactis subsp. lactis NRIC1150, Lactococcus lactis subsp. lactis JCM20101, Lactococcus lactis subsp. lactis JCM7638, Lactococcus lactis subsp. lactis ATCC11454, Lactococcus garvieae NBRC100934, Lactococcus lactis subsp. cremoris JCM16167, Lactococcus lactis subsp. cremoris NBRC100676, Lactococcus lactis subsp. hordniae JCM1180, Lactococcus lactis subsp. hordniae JCM11040, and Lactococcus plantarum JCM11056.

The Leuconostoc bacteria mentioned above may be Leuconostoc carnosum, Leuconostoc lactis, or the like, for example. Specific examples of Leuconostoc bacteria include Leuconostoc carnosum JCM9695 and Leuconostoc lactis NBRC12455.

The Pediococcus bacteria mentioned above may be Pediococcus acidilactici, Pediococcus pentosaceus, Pediococcus cellicola, Pediococcus claussenii, Pediococcus damnosus, Pediococcus ethanolidurans, Pediococcus inopinatus, Pediococcus parvulus, Pediococcus stilesii, or the like, for example. Specific examples of Pediococcus bacteria include Pediococcus acidilactici JCM8797, Pediococcus acidilactici K15, and Pediococcus damnosus JCM5886.

The Streptococcus bacteria mentioned above may be Streptococcus thermophilus or the like, for example. Specific examples of Streptococcus bacteria include Streptococcus thermophilus SBC8781.

The Enterococcus bacteria mentioned above may be Enterococcus alcedinis or the like, for example.

The Lactobacillus bacteria mentioned above may be Lactobacillus paracasei, Lactobacillus delbrueckii, Lactobacillus acidophilus, Lactobacillus casei, Lactobacillus fructivorans, Lactobacillus hilgardii, Lactobacillus rhamnosus, Lactobacillus gasseri, Lactobacillus acidophilus, Lactobacillus bulgaricus, Lactobacillus parakefiri, Lactobacillus plantarum, or Lactobacillus pentosus, for example.

Specific examples of Lactobacillus bacteria include Lactobacillus paracasei KW3110, Lactobacillus paracasei MCC1849, Lactobacillus paracasei K71, Lactobacillus rhamnosus GG, Lactobacillus rhamnosus CRL1505, Lactobacillus gasseri SBT2055, Lactobacillus acidophilus L-92, Lactobacillus bulgaricus OLL1073R-1, Lactobacillus parakefiri (Lentilactobacillus parakefiri in new classification) JCM8573, Lactobacillus plantarum (Lactiplantibacillus plantarum in new classification) L-137, and Lactobacillus pentosus (Lactiplantibacillus pentosus in new classification) ONRICb0240.

The acetic acid bacteria mentioned above may be Gluconacetobacter bacteria, Acetobacter bacteria, Gluconobacter bacteria, or the like, for example, without any specific limitations, are preferably Gluconacetobacter bacteria, are more preferably Gluconacetobacter hansenii, and are even more preferably Gluconacetobacter hansenii GK-1.

The Bacillus bacteria mentioned above may be Bacillus coagulans or the like, for example, without any specific limitations. Specific examples of Bacillus bacteria include Bacillus coagulans SANK70258 strain.

Of the examples given above, the inclusion of one type or two or more types selected from the group consisting of Lactobacillus rhamnosus CRL1505, Lactococcus lactis subsp. lactis JCM5805, and Lactobacillus paracasei KW3110 as the beneficial bacteria is preferable.

In the present disclosure, the dead bacteria of the beneficial bacteria may be a dry material or may be a non-dry material without any specific limitations, though a dry material is preferable from a viewpoint of storage stability of the dead beneficial bacteria. In particular, a dry powder of dead beneficial bacteria is preferable as the dead bacteria of the beneficial bacteria.

No specific limitations are placed on the method by which the dead bacteria of the beneficial bacteria are prepared. For example, a method in which a culture medium where beneficial bacteria have been cultured is sterilized and then filtration and centrifugal separation, or the like, are performed to collect bacterial cells or a method in which bacterial cells are collected by filtration and centrifugal separation, or the like, from a culture **medium** where beneficial bacteria have been cultured and are then sterilized can be adopted. Note that among beneficial bacteria, particularly lactic acid bacteria, for example, can be cultured using a lactic acid bacteria culture medium that is commonly known to those skilled in the art such as MRS (de Man-Rogosa-Sharpe) culture medium, which contains glucose, hydrolyzed protein, and yeast extract. In general, culturing can be performed under anaerobic conditions with a culture temperature of 30°C to 37°C and a culture period of 2 days to 3 days.

In addition, the bacterial cells that have been collected after culturing can be further subjected to drying and pulverization as necessary. Note that no specific limitations are placed on the means of sterilization, and common means of killing bacteria such as not only heating, but also UV irradiation, γ-ray irradiation, and so forth can be adopted.

The concentration of dead beneficial bacteria contained in the presently disclosed beverage is required to be 5 × 10⁸/L or more, is preferably 10 × 10⁸/L or more, and is preferably 20,000 × 10⁸/L or less, preferably 10,000 × 10⁸/L or less, preferably 6,000 × 10⁸/L or less, preferably 3,000 × 10⁸/L or less, preferably 2,000 × 10⁸/L or less, preferably 1,000 × 10⁸/L or less, preferably 500 × 10⁸/L or less, and preferably 250 × 10⁸/L or less. When the concentration of the dead beneficial bacteria is not less than any of the lower limits set forth above, efficacy of the dead beneficial bacteria can be sufficiently displayed. Moreover, when the concentration of the dead beneficial bacteria is not more than any of the upper limits set forth above, it is not necessary to add an excessive amount of a pyrazine in order to mask a distinctive odor originating from the dead beneficial bacteria, and increased cost and deterioration of balance of flavor caused by excessive pyrazine can be suppressed.

The concentration of the dead beneficial bacteria contained in the beverage can be controlled through adjustment of the additive amount of the dead beneficial bacteria that is blended in the beverage. Furthermore, the concentration of the dead beneficial bacteria contained in the beverage can be measured by a commonly known bacterial count measurement method for beneficial bacteria without any specific limitations, and examples thereof include direct microscopy, the electric sensing zone method, the PCR method, and flow cytometry, with flow cytometry being preferable.

### <Pyrazine>

The presently disclosed beverage contains a pyrazine. Specifically, the presently disclosed beverage preferably contains at least one of 2-methylpyrazine, 2,5-dimethylpyrazine, and 2,6-dimethylpyrazine as the pyrazine, and, in particular, preferably contains 2-methylpyrazine. The pyrazine may be added in the form of a formulation, or a food that contains a pyrazine, such as coffee or barley tea, may be added as a raw material. In a case in which a food that contains a pyrazine, such as coffee, is added as a pyrazine source, it may be the case that a mixture of a plurality of types of pyrazines is added.

The concentration of the pyrazine is required to be 1 ppb or more, is preferably 5 ppb or more, more preferably 10 ppb or more, more preferably 25 ppb or more, more preferably 50 ppb or more, more preferably 100 ppb or more, even more preferably 200 ppb or more, and particularly preferably 500 ppb or more, and is preferably 40,000 ppb or less, more preferably 30,000 ppb or less, even more preferably 20,000 ppb or less, even more preferably 15,000 ppb or less, further preferably 10,000 ppb or less, and particularly preferably 5,000 ppb or less. When the concentration of the pyrazine is not less than any of the lower limits set forth above, a distinctive off-odor of the beneficial bacteria can be effectively reduced. When the concentration of the pyrazine is not more than any of the upper limits set forth above, an increase of metal-like flavor originating from the pyrazine can be suppressed. Note that in a case in which the beverage contains just one of the compounds listed above as the pyrazine, the content of that pyrazine preferably satisfies any of the ranges set forth above, and in a case in which the beverage contains a plurality of the compounds, the total content of the plurality of types of pyrazines preferably satisfies any of the ranges set forth above. The concentration of a pyrazine can be measured by a method described further below in the EXAMPLES section.

In the presently disclosed beverage, the concentration of the pyrazine and the concentration of the dead beneficial bacteria preferably satisfy the following relationship formula (1). When the concentration of the pyrazine and the concentration of the dead beneficial bacteria satisfy the following relationship formula (1), a distinctive off-odor of the beneficial bacteria can be effectively masked. 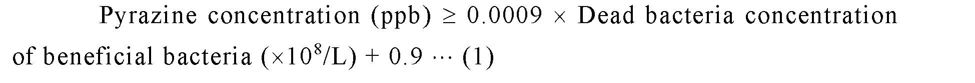 Pyrazine concentration (ppb) ≥ 0.0009 × Dead bacteria concentration of beneficial bacteria (×108/L) + 0.9 ··· (1)

### <Other ingredients>

The presently disclosed beverage may contain one type or two or more types of additives selected from the group consisting of acidulants, fragrances and flavorings, colorings, sweeteners, preservatives, thickeners, stabilizers, emulsifiers, dietary fiber, bittering agents, antioxidants, pH modifiers, vitamins, nutritional fortifiers, umami ingredients, dietary fiber, extracts, solvents, minerals, water-soluble functional ingredients, and lipid-soluble functional ingredients within a range not interfering with the effects according to the present disclosure. No specific limitations are placed on the additives described above, and typically used examples thereof can be adopted. Specifically, acesulfame K, stevia, and sucralose can be adopted as sweeteners, citric acid can be adopted as an acidulant, soybean polysaccharide and pectin can be adopted as stabilizers, and sodium, potassium, magnesium, and calcium can be adopted as minerals, for example.

The presently disclosed beverage may be an immunostimulating composition. An immunostimulating composition is a composition that has immunostimulating ability (immunity activating ability). Immunostimulating ability (immunity activating ability) refers to a natural immune system stimulating effect (activating effect) on cells or living organisms. An immunostimulating composition according to one embodiment may be a dendritic cell activating composition or may be a plasmacytoid dendritic cell activating (pDC activating) composition.

As an immunostimulating composition, the presently disclosed beverage may be a pharmaceutical composition or may be a quasi-pharmaceutical product. The presently disclosed beverage serving as an immunostimulating composition contains the dead beneficial bacteria described above in an effective amount. The term "effective amount" as used here means a content such that with the presently disclosed beverage, dead beneficial bacteria are consumed to a degree that effects such as immunostimulation are displayed upon consumption of the beverage in an amount that is typically drunk. In a case in which the presently disclosed beverage is an immunostimulating composition, the presently disclosed beverage can be a health food, a functional food, a nutrition supplementing food, a food with health claims (for example, a food for specified health use, a food with nutrient function claims, or a food with function claims), a food for special dietary use (for example, an infant food, a food for pregnant or lactating women, or a food for medical use), or a supplement.

In a case in which the presently disclosed beverage is provided as an immunostimulating composition, the presently disclosed beverage can, in particular, be a health food, a functional food, a nutritional composition, a nutrition supplementing food, a food for health use, a food for specified health use, a food with nutrient function claims, a food with function claims, or the like that has immunostimulating ability.

In a case in which the presently disclosed beverage is an immunostimulating composition, the presently disclosed beverage can be labeled for people who are concerned about reduction of immune function or supporting the maintenance of immune function of a healthy person (immune care), for people who are concerned about sun burn and want to suppress reduction of immune function, for people who are concerned about skin damage in daily life, for people who are concerned about skin dryness, for people who are concerned about skin flushing, for people who are concerned about skin erythema, for people who are concerned about skin redness, for people who are concerned about facial redness, for people who are concerned about chapped hands, etc.

Moreover, in a case in which the presently disclosed beverage is an immunostimulating composition, the presently disclosed beverage can be consumed by a subject requiring immunostimulation. The subject requiring immunostimulation may be a subject who is infected with a virus, a subject who has caught a cold, or a subject who is 65 or older, for example, without any specific limitations.

### (Method of producing beverage)

The presently disclosed method of producing a beverage includes a blending step of blending dead bacteria of beneficial bacteria and a pyrazine in specific concentrations. This blending step is a step of blending such that a dead bacteria concentration of beneficial bacteria is 5 × 10⁸/L or more and a concentration of a pyrazine is 1 ppb or more. No specific limitations are placed on the presently disclosed method of producing a beverage so long as it includes the specific blending step described above. In other words, production can be performed according to a conventional method of producing a beverage that is commonly known so long as the blending step described above is included.

The blending step of blending such that a dead bacteria concentration of beneficial bacteria is 5 × 10⁸/L or more and a concentration of a pyrazine is 1 ppb or more may, for example, be a step of adding a pyrazine in an amount such as to have a concentration of 1 ppb or more, an optional solvent such as water, and other optional ingredients into a mixing tank and adding dead bacteria of beneficial bacteria thereto in a proportion of 5 × 10⁸/L or more. Alternatively, the aforementioned blending step may be a step of simultaneously adding dead bacteria of beneficial bacteria, a pyrazine, and an optional solvent into a mixing tank. The format of addition, order of blending, and so forth are of course not limited to configurations described above.

Although it may be the case that the presently disclosed beverage is not a packaged beverage, the presently disclosed beverage is preferably a packaged beverage. A container of the packaged beverage may be a container formed of a plastic material (resin bottle) such as a PET bottle, a polypropylene bottle, or a polyvinyl chloride bottle, a glass bottle container, a can container, or the like. The volume of the container is not specifically limited but may be 100 mL or more, and preferably 185 mL or more, for example, and may be 1,000 mL or less, and preferably 680 mL or less, for example. Note that the concentration of a pyrazine can be measured by a method described in the EXAMPLES section of the present specification.

The packaged beverage can be produced by loading a beverage that has been obtained according to the presently disclosed production method set forth above into a container such as any of those listed above and then sealing the container according to a known method.

The presently disclosed method of producing a beverage may include a heat treatment step of heat treating a blend that has been obtained through the blending step described above. The inclusion of the heat treatment step is preferable from viewpoints such as improving preservability. The method and conditions of the heat treatment can be a method and conditions that are typically used for a beverage such as a packaged beverage. Retort sterilization, UHT (Ultra High Temperature) sterilization, HTST (High Temperature Short Time) sterilization, or pasteurizer sterilization is preferable.

### (Method of masking off-odor of beverage)

The presently disclosed method of masking an off-odor of a beverage is a method of masking an off-odor of a beverage that contains dead bacteria of beneficial bacteria. No specific limitations are placed on this method of masking an off-odor so long as it includes a blending step of blending dead bacteria of beneficial bacteria and a pyrazine in specific concentrations. A feature of the method is that in the blending step, blending is performed such that a dead bacteria concentration of beneficial bacteria is 5 × 10⁸/L or more and a concentration of a pyrazine is 1 ppb or more.

The blending step of blending such that a dead bacteria concentration of beneficial bacteria is 5 × 10⁸/L or more and a concentration of a pyrazine is 1 ppb or more can be any of the same steps as for the step described in relation to the presently disclosed method of producing a beverage.

Note that the presently disclosed method of masking an off-odor of a beverage may include a heat treatment step of heating treating a blend obtained through the blending step described above. The heat treatment step can be any of the same steps as for the step described in relation to the presently disclosed method of producing a beverage.

### EXAMPLES

The following provides a more specific description of the present disclosure based on illustrative tests. However, the present disclosure is not limited by the matter described below.

Samples according to test groups described below were subjected to various measurements and evaluations by the following methods.

### <Concentration of pyrazine>

### <<Quantification method>>

The pyrazine content in a beverage was measured by gas chromatography with a mass spectrometer (GC/MS). The GC/MS analysis was more specifically performed as follows. First, aroma ingredients in a tasting sample were separated using a C18 solid phase extraction column, and an ethyl acetate eluting fraction was taken to be an analysis sample. Quantification was performed by an internal standard method with borneol added as an internal standard such as to be 25 ppb in the analysis sample. The conditions of GC/MS analysis are shown below in Table 1.

**[Table 1]**

| Item | | Condition |
|---|---|---|
| Capillary column | | HP-INNOWax 60 m × 250 µm × 0.25 µm |
| Oven temperature | | 40°C (0.3 min)-3°C/min-240°C (20 min) |
| Carrier gas | | Helium, 10 psi low pressure gas supply |
| Transfer line temperature | | 240°C |
| MS ion source temperature | | 230°C |
| MSQ pole temperature | | 150°C |
| Front injection port temperature | | 200°C |
| Monitoring ion | | Same as following quantifier ions |
| Quantifier ion m/z value | Borneol | 110 |
| | 2-Methylpyrazine | 94.1 |
| | 2,5-Dimethylpyrazine | 108 |
| | 2,6-Dimethylpyrazine | 108 |

### (Test 1) Influence of beneficial bacteria sterilization conditions on off-odor of beverage

The following test was conducted in order to investigate the relationship between sterilization conditions of beneficial bacteria and distinctive off-odor of beneficial bacteria of a beverage.

### <Sample preparation>

Rhamnosus live bacteria powder (including one type or a plurality of types of Lactobacillus rhamnosus) of 3,500 × 10⁸/g in concentration was diluted by a factor of 35 using water and was subsequently subjected to 1 hour of heat treatment at 80°C to prepare a rhamnosus dead bacteria aqueous solution of 100 × 10⁸/g in concentration. This aqueous solution was diluted to a rhamnosus dead bacteria concentration of 120 × 10⁸/L with water to obtain a diluted rhamnosus dead bacteria aqueous solution, and this diluted aqueous solution was loaded into a can to prepare a sample (beverage) according to test group 1. In addition, diluted rhamnosus dead bacteria aqueous solutions that were the same as that described above were subjected to heating under conditions indicated in Table 2 to prepare samples according to test groups 2 and 3.

### <Sensory evaluation>

For beverages obtained in the test groups described above that had been prepared at approximately 20°C, six trained panelists having sensory discrimination ability evaluated off-odor of the beverage obtained in each test group in increments of 0.5 points in accordance with a standard set in test 2 described below. An average value of the evaluation scores of the six panelists was calculated. Note that the standard error of the average value of the evaluation scores for all panelists was 0.2 or less. The results are shown in Table 2.

### (Test 2) Influence of concentration of dead beneficial bacteria on off-odor of beverage

The following test was conducted in order to investigate the relationship between the concentration of dead beneficial bacteria and distinctive off-odor of beneficial bacteria of a beverage.

### <Sample preparation>

Rhamnosus live bacteria powder (including one type or a plurality of types of Lactobacillus rhamnosus) of 3,500 × 10⁸/g in concentration was diluted by a factor of 35 using water and was subsequently subjected to 1 hour of heat treatment at 80°C to prepare a rhamnosus dead bacteria aqueous solution of 100 × 10⁸/g in concentration. This aqueous solution was diluted to rhamnosus dead bacteria concentrations indicated in Table 3 with water. Each of these diluted aqueous solutions was loaded into a can and was then heated at 121°C for 5 minutes to prepare samples (beverages) according to test groups 4 to 12.

### <Sensory evaluation>

For beverages obtained in the test groups that had been prepared at approximately 20°C, a sample where beneficial bacteria (rhamnosus) were not added and a sample where 20,000 × 10⁸/L of beneficial bacteria were added were respectively fixed as 0 points and 5 points, the interval from 0 points to 5 points was equally divided to set a standard per "1 point" of evaluation score, and six trained panelists having sensory discrimination ability made an evaluation of from 0 points to 5 points (a smaller score is preferable) in increments of 0.5 points based on this standard. An average value of the evaluation scores of the six panelists was calculated. The results are shown in Table 3. Note that the standard error of the average value of the evaluation scores for all panelists was less than 0.2. Also note that off-odor originating from lactic acid bacteria such as rhamnosus, inclusive of buttery odor, was evaluated as the off-odor.

### (Test 3) Influence of pyrazine concentration on reduction of off-odor of beverage having dead beneficial bacteria concentration of 10 × 10⁸/L

The following test was conducted in order to investigate the relationship between pyrazine concentration and distinctive off-odor of beneficial bacteria of a beverage having a dead beneficial bacteria concentration of 10 × 10⁸/L.

### <Sample preparation>

Rhamnosus live bacteria powder (including one type or a plurality of types of Lactobacillus rhamnosus) of 3,500 × 10⁸/g in concentration was diluted by a factor of 35 using water and was subsequently subjected to 1 hour of heat treatment at 80°C to prepare a rhamnosus dead bacteria aqueous solution of 100 × 10⁸/g in concentration. This aqueous solution was mixed with pyrazines and water to give the types and concentrations indicated in Table 4. Each of these aqueous solutions was loaded into a can and then heated at 121°C for 5 minutes to prepare samples according to test groups 13 to 21, H3 (H indicates roasted green tea (hojicha)), and M3 (M indicates barley tea (mugicha)). Note that a pyrazine was not added in a sample according to test group 6.

Moreover, for the sample according to test group 21, a plurality of coffee extracts were added such that the types and concentrations of pyrazines contained in the sample were as indicated in Table 4.

Furthermore, for test groups H3 and M3, roasted green tea (H3) and barley tea (M3) were respectively added such that the total concentration of pyrazines was as indicated in Table 4.

### <Sensory evaluation>

For beverages obtained in the test groups described above, a sample where a pyrazine was not added and a sample where 20,000 ppb of a pyrazine was added were respectively fixed as 0 points and 4 points, the interval from 0 points to 4 points was equally divided to set a standard per " 1 point" of evaluation score, and an evaluation of from 0 points to 4 points (a larger score is preferable) was made in increments of 0.5 points based on this standard. An average value of the evaluation scores of the six panelists was calculated. Note that the standard error of the average value of the evaluation scores for all panelists was less than 0.2. The results are shown in Table 4.

### (Test 4) Influence of pyrazine concentration on reduction of off-odor of beverage having dead beneficial bacteria concentration of 100 × 10⁸/L

The following test was conducted in order to investigate the relationship between pyrazine concentration and distinctive off-odor of beneficial bacteria of a beverage having a dead beneficial bacteria concentration of 100 × 10⁸/L.

### <Sample preparation>

Rhamnosus live bacteria powder (including one type or a plurality of types of Lactobacillus rhamnosus) of 3,500 × 10⁸/g in concentration was diluted by a factor of 35 using water and was subsequently subjected to 1 hour of heat treatment at 80°C to prepare a rhamnosus dead bacteria aqueous solution of 100 × 10⁸/g in concentration. This aqueous solution was mixed with pyrazines and water to give the types and concentrations indicated in Table 5. Each of these aqueous solutions was loaded into a can and then heated at 121°C for 5 minutes to prepare samples according to test groups 22 to 30, H4, and M4. Note that a pyrazine was not added in a sample according to test group 7.

Moreover, for the sample according to test group 30, a plurality of coffee extracts were added such that the types and concentrations of pyrazines contained in the sample were as indicated in Table 5.

Furthermore, for test groups H4 and M4, roasted green tea (H4) and barley tea (M4) were respectively added such that the total concentration of pyrazines was as indicated in Table 5.

### <Sensory evaluation>

For beverages obtained in the test groups described above, a sensory evaluation was performed by the same method as the sensory evaluation test in test 3. The results are shown in Table 5.

### (Test 5) Influence of pyrazine concentration on reduction of off-odor of beverage having dead beneficial bacteria concentration of 1,000 × 10⁸/L

The following test was conducted in order to investigate the relationship between pyrazine concentration and distinctive off-odor of beneficial bacteria of a beverage having a dead beneficial bacteria concentration of 1,000 × 10⁸/L.

### <Sample preparation>

Rhamnosus live bacteria powder (including one type or a plurality of types of Lactobacillus rhamnosus) of 3,500 × 10⁸/g in concentration was diluted by a factor of 35 using water and was subsequently subjected to 1 hour of heat treatment at 80°C to prepare a rhamnosus dead bacteria aqueous solution of 100 × 10⁸/g in concentration. This aqueous solution was mixed with pyrazines and water to give the types and concentrations indicated in Table 6. Each of these aqueous solutions was loaded into a can and then heated at 121°C for 5 minutes to prepare samples according to test groups 31 to 39, H5, and M5. Note that a pyrazine was not added in a sample according to test group 8.

Moreover, for the sample according to test group 39, a plurality of coffee extracts were added such that the types and concentrations of pyrazines contained in the sample were as indicated in Table 6.

Furthermore, for test groups H5 and M5, roasted green tea (H5) and barley tea (M5) were respectively added such that the total concentration of pyrazines was as indicated in Table 6.

### <Sensory evaluation>

For beverages obtained in the test groups described above, a sensory evaluation was performed by the same method as the sensory evaluation test in test 3. The results are shown in Table 6.

### (Test 6) Influence of pyrazine concentration on reduction of off-odor of beverage having dead beneficial bacteria concentration of 5,000 × 10⁸/L

The following test was conducted in order to investigate the relationship between pyrazine concentration and distinctive off-odor of beneficial bacteria of a beverage having a dead beneficial bacteria concentration of 5,000 × 10⁸/L.

### <Sample preparation>

Rhamnosus live bacteria powder (including one type or a plurality of types of Lactobacillus rhamnosus) of 3,500 × 10⁸/g in concentration was diluted by a factor of 35 using water and was subsequently subjected to 1 hour of heat treatment at 80°C to prepare a rhamnosus dead bacteria aqueous solution of 100 × 10⁸/g in concentration. This aqueous solution was mixed with pyrazines and water to give the types and concentrations indicated in Table 7. Each of these aqueous solutions was loaded into a can and then heated at 121°C for 5 minutes to prepare samples according to test groups 40 to 48, H6, and M6. Note that a pyrazine was not added in a sample according to test group 10.

Moreover, for the sample according to test group 48, a plurality of coffee extracts were added such that the types and concentrations of pyrazines in the sample were as indicated in Table 7.

Furthermore, for test groups H6 and M6, roasted green tea (H6) and barley tea (M6) were respectively added such that the total concentration of pyrazines was as indicated in Table 7.

### <Sensory evaluation>

For beverages obtained in the test groups described above, a sensory evaluation was performed by the same method as the sensory evaluation test in test 3. The results are shown in Table 7.

### (Test 7) Influence of pyrazine concentration on reduction of off-odor of beverage having dead beneficial bacteria concentration of 10,000 × 10⁸/L

The following test was conducted in order to investigate the relationship between pyrazine concentration and distinctive off-odor of beneficial bacteria of a beverage having a dead beneficial bacteria concentration of 10,000 × 10⁸/L.

### <Sample preparation>

Rhamnosus live bacteria powder (including one type or a plurality of types of Lactobacillus rhamnosus) of 3,500 × 10⁸/g in concentration was diluted by a factor of 35 using water and was subsequently subjected to 1 hour of heat treatment at 80°C to prepare a rhamnosus dead bacteria aqueous solution of 100 × 10⁸/g in concentration. This aqueous solution was mixed with pyrazines and water to give the types and concentrations indicated in Table 8. Each of these aqueous solutions was loaded into a can and then heated at 121°C for 5 minutes to prepare samples according to test groups 49 to 57, H7, and M7. Note that a pyrazine was not added in a sample according to test group 11.

Moreover, for the sample according to test group 57, a plurality of coffee extracts containing the types and concentrations of pyrazines indicated in Table 8 were added.

Furthermore, for test groups H7 and M7, roasted green tea (H7) and barley tea (M7) were respectively added such that the total concentration of pyrazines was as indicated in Table 8.

### <Sensory evaluation>

For beverages obtained in the test groups described above, a sensory evaluation was performed by the same method as the sensory evaluation test in test 3. The results are shown in Table 8.

### (Test 8) Influence of pyrazine concentration on reduction of off-odor of beverage having dead beneficial bacteria concentration of 20,000 × 10⁸/L

The following test was conducted in order to investigate the relationship between pyrazine concentration and distinctive off-odor of beneficial bacteria of a beverage having a dead beneficial bacteria concentration of 20,000 × 10⁸/L.

### <Sample preparation>

Rhamnosus live bacteria powder (including one type or a plurality of types of Lactobacillus rhamnosus) of 3,500 × 10⁸/g in concentration was diluted by a factor of 35 using water and was subsequently subjected to 1 hour of heat treatment at 80°C to prepare a rhamnosus dead bacteria aqueous solution of 100 × 10⁸/g in concentration. This aqueous solution was mixed with pyrazines and water to give the types and concentrations indicated in Table 9. Each of these aqueous solutions was loaded into a can and then heated at 121°C for 5 minutes to prepare samples according to test groups 58 to 66, H8, and M8. Note that a pyrazine was not added in a sample according to test group 12.

Moreover, for the sample according to test group 66, a plurality of coffee extracts were added such that the types and concentrations of pyrazines in the sample were as indicated in Table 9.

Furthermore, for test groups H8 and M8, roasted green tea (H8) and barley tea (M8) were respectively added such that the total concentration of pyrazines was as indicated in Table 9.

### <Sensory evaluation>

For beverages obtained in the test groups described above, a sensory evaluation was performed by the same method as the sensory evaluation test in test 3. The results are shown in Table 9.

**[Table 2]**

| | Units | Test group | | |
|---|---|---|---|---|
| | | 1 | 2 | 3 |
| Rhamnosus dead bacteria concentration | ×10⁸/L | 120 | 120 | 120 |
| Heating conditions | - | Not sterilized | 80°C 10 minutes | 121°C 5 minutes |
| Off-odor evaluation | - | 2.0 | 2.6 | 3.2 |

**[Table 3]**

| | Units | Test group | | | | | | | | |
|---|---|---|---|---|---|---|---|---|---|---|
| | | 4 | 5 | 6 | 7 | 8 | 9 | 10 | 11 | 12 |
| Rhamnosus dead bacteria concentration | ×10⁸/L | 0 | 5 | 10 | 100 | 1,000 | 2,000 | 5,000 | 10,000 | 20,000 |
| Heating conditions | - | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes |
| Off-odor evaluation | - | 0.0 | 0.3 | 1.1 | 2.8 | 3.4 | 3.6 | 4.0 | 4.5 | 5.0 |

**[Table 4]**

| | | Units | Test group | | | | | | | | | | | |
|---|---|---|---|---|---|---|---|---|---|---|---|---|---|---|
| | | | 6 | 13 | 14 | 15 | 16 | 17 | 18 | 19 | 20 | 21 | H3 | M3 |
| Rhamnosus dead bacteria concentration | | ×10⁸/L | 10 | 10 | 10 | 10 | 10 | 10 | 10 | 10 | 10 | 10 | 10 | 10 |
| Heating conditions | | - | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes |
| Pyrazine | 2-Methylpyrazine | ppb | - | 1 | 10 | 100 | 1,000 | 10,000 | 20,000 | - | - | 660 | 150 | 450 |
| | 2,5-Dimethylpyrazine | | - | - | - | - | - | - | - | 1,000 | - | 180 | 70 | 20 |
| | 2,6-Dimethylpyrazine | | - | - | - | - | - | - | - | - | 1,000 | 160 | 30 | 30 |
| Evaluation of off-odor reduction | | - | 0.0 | 1.3 | 1.9 | 2.3 | 3.4 | 3.8 | 4.0 | 3.5 | 3.5 | 3.8 | 3.3 | 3.3 |

**[Table 5]**

| | | Units | Test group | | | | | | | | | | | |
|---|---|---|---|---|---|---|---|---|---|---|---|---|---|---|
| | | | 7 | 22 | 23 | 24 | 25 | 26 | 27 | 28 | 29 | 30 | H4 | M4 |
| Rhamnosus dead bacteria concentration | | ×10⁸/L | 100 | 100 | 100 | 100 | 100 | 100 | 100 | 100 | 100 | 100 | 100 | 100 |
| Heating conditions | | - | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes |
| Pyrazine | 2-Methylpyrazine | ppb | - | 1 | 10 | 100 | 1,000 | 10,000 | 20,000 | - | - | 660 | 150 | 450 |
| | 2,5-Dimethylpyrazine | | - | - | - | - | - | - | - | 1,000 | - | 180 | 70 | 20 |
| | 2,6-Dimethylpyrazine | | - | - | - | - | - | - | - | - | 1,000 | 160 | 30 | 30 |
| Evaluation of off-odor reduction | | - | 0.0 | 1.0 | 2.0 | 2.7 | 3.2 | 3.8 | 4.0 | 3.6 | 3.4 | 3.7 | 3.1 | 3.3 |

**[Table 5]**

| | | Units | Test group | | | | | | | | | | | |
|---|---|---|---|---|---|---|---|---|---|---|---|---|---|---|
| | | | 8 | 31 | 32 | 33 | 34 | 35 | 36 | 37 | 38 | 39 | H5 | M5 |
| Rhamnosus dead bacteria concentration | | ×10⁸/L | 1,000 | 1,000 | 1,000 | 1,000 | 1,000 | 1,000 | 1,000 | 1,000 | 1,000 | 1,000 | 1,000 | 1,000 |
| Heating conditions | | - | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes |
| Pyrazine | 2-Methylpyrazine | ppb | - | 1 | 10 | 100 | 1,000 | 10,000 | 20,000 | - | - | 660 | 150 | 450 |
| | 2,5-Dimethylpyrazine | | - | - | - | - | - | - | - | 1,000 | - | 180 | 70 | 20 |
| | 2,6-Dimethylpyrazine | | - | - | - | - | - | - | - | - | 1,000 | 160 | 30 | 30 |
| Evaluation of off-odor reduction | | - | 0.0 | 0.7 | 1.7 | 2.8 | 3.2 | 3.8 | 4.0 | 3.2 | 3.1 | 3.3 | 3.1 | 3.3 |

**[Table 7]**

| | | Units | Test group | | | | | | | | | | | |
|---|---|---|---|---|---|---|---|---|---|---|---|---|---|---|
| | | | 10 | 40 | 41 | 42 | 43 | 44 | 45 | 46 | 47 | 48 | H6 | M6 |
| Rhamnosus dead bacteria concentration | | ×10⁸/L | 5,000 | 5,000 | 5,000 | 5,000 | 5,000 | 5,000 | 5,000 | 5,000 | 5,000 | 5,000 | 5,000 | 5,000 |
| Heating conditions | | - | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes |
| Pyrazine | 2-Methylpyrazine | ppb | - | 1 | 10 | 100 | 1,000 | 10,000 | 20,000 | - | - | 660 | 150 | 450 |
| | 2,5-Dimethylpyrazine | | - | - | - | - | - | - | - | 1,000 | - | 180 | 70 | 20 |
| | 2,6-Dimethylpyrazine | | - | - | - | - | - | - | - | - | 1,000 | 160 | 30 | 30 |
| Evaluation of off-odor reduction | | - | 0.0 | 0.4 | 1.2 | 2.0 | 2.6 | 3.2 | 4.0 | 2.8 | 2.8 | 2.9 | 2.6 | 2.5 |

**[Table 8]**

| | | Units | Test group | | | | | | | | | | | |
|---|---|---|---|---|---|---|---|---|---|---|---|---|---|---|
| | | | 11 | 49 | 50 | 51 | 52 | 53 | 54 | 55 | 56 | 57 | H7 | M7 |
| Rhamnosus dead bacteria concentration | | ×10⁸/L | 10,000 | 10,000 | 10,000 | 10,000 | 10,000 | 10,000 | 10,000 | 10,000 | 10,000 | 10,000 | 10,000 | 10,000 |
| Heating conditions | | - | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes |
| Pyrazine | 2-Methylpyrazine | ppb | - | 1 | 10 | 100 | 1,000 | 10,000 | 20,000 | - | - | 660 | 150 | 450 |
| | 2,5-Dimethylpyrazine | | - | - | - | - | - | - | - | 1,000 | - | 180 | 70 | 20 |
| | 2,6-Dimethylpyrazine | | - | - | - | - | - | - | - | - | 1,000 | 160 | 30 | 30 |
| Evaluation of off-odor reduction | | - | 0.0 | 0.5 | 1.0 | 1.9 | 2.5 | 3.1 | 4.0 | 2.6 | 2.6 | 2.7 | 2.2 | 2.3 |

**[Table 9]**

| | | Units | Test group | | | | | | | | | | | |
|---|---|---|---|---|---|---|---|---|---|---|---|---|---|---|
| | | | 12 | 58 | 59 | 60 | 61 | 62 | 63 | 64 | 65 | 66 | H8 | M8 |
| Rhamnosus dead bacteria concentration | | ×10⁸/L | 20,000 | 20,000 | 20,000 | 20,000 | 20,000 | 20,000 | 20,000 | 20,000 | 20,000 | 20,000 | 20,000 | 20,000 |
| Heating conditions | | - | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes | 121°C 5 minutes |
| Pyrazine | 2-Methylpyrazine | ppb | - | 1 | 10 | 100 | 1,000 | 10,000 | 20,000 | - | - | 660 | 150 | 450 |
| | 2,5-Dimethylpyrazine | | - | - | - | - | - | - | - | 1,000 | - | 180 | 70 | 20 |
| | 2,6-Dimethylpyrazine | | - | - | - | - | - | - | - | - | 1,000 | 160 | 30 | 30 |
| Evaluation of off-odor reduction | | - | 0.0 | 0.4 | 0.8 | 1.5 | 2.4 | 3.0 | 4.0 | 2.5 | 2.4 | 2.6 | 2.2 | 2.2 |

It can be seen from Table 2 that the distinctive off-odor of beneficial bacteria (lactic acid bacteria in the preceding examples) strengthens with increasing heating temperature of a beverage containing the beneficial bacteria.

Moreover, it can be seen that in a situation in which heating is performed with a certain temperature for a certain time, and more specifically a situation in which heating is performed at 121°C for 5 minutes in the data presented in Table 3, the distinctive off-odor of beneficial bacteria becomes an issue in test groups 5 to 12 where beneficial bacteria are contained in a concentration of 5 × 10⁸/L or more.

It can be seen from Tables 4 and 5 that in test groups 13 to 30, H3, H4, M3, and M4 where the concentration of dead beneficial bacteria is 10 × 10⁸/L or 100 × 10⁸/L, an effect of reducing off-odor is expressed when 1 ppb or more of a pyrazine is included. It can also be seen that a similar level of off-odor reducing effect is expressed not just when the type of pyrazine is 2-methylpyrazine by itself, but also with 2,5-dimethylpyrazine and 2,6-dimethylpyrazine by themselves, and with coffee extracts, roasted green tea, and barley tea containing a mixture of these pyrazines.

It can be seen from Tables 6 to 9 that an effect of reducing off-odor when 1 ppb or more of a pyrazine is included is also expressed in test groups 31 to 66, H5 to H8, and M5 to M8 where the concentration of dead beneficial bacteria is within a range of not less than 1,000 × 10⁸L and not more than 20,000 × 10⁸/L. It can also be seen that a similar level of off-odor reducing effect is expressed not just when the type of pyrazine is 2-methylpyrazine by itself, but also with 2,5-dimethylpyrazine and 2,6-dimethylpyrazine by themselves, and with coffee extracts, roasted green tea, and barley tea containing a mixture of these pyrazines.

### INDUSTRIAL APPLICABILITY

According to the present disclosure, it is possible to provide a beverage in which a distinctive off-odor of beneficial bacteria is masked.

## Claims

1. A beverage comprising dead bacteria of beneficial bacteria, wherein
a dead bacteria concentration of the beneficial bacteria is 5 × 10⁸/L or more, and
a pyrazine is included in a concentration of 1 ppb or more.

2. The beverage according to claim 1, wherein the dead bacteria concentration of the beneficial bacteria is 20,000 × 10⁸/L or less.

3. The beverage according to claim 1, wherein the beneficial bacteria are one type or two or more types selected from the group consisting of Lactobacillus bacteria and Lactococcus bacteria.

4. The beverage according to claim 1, wherein the beneficial bacteria are one type or two or more types selected from the group consisting of Lactobacillus rhamnosus CRL1505, Lactococcus lactis subsp. lactis JCM5805, and Lactobacillus paracasei KW3110.

5. The beverage according to claim 1, wherein the concentration of the pyrazine is 40,000 ppb or less.

6. The beverage according to claim 1, wherein the concentration of the pyrazine and the dead bacteria concentration of the beneficial bacteria satisfy relationship formula (1), shown below: 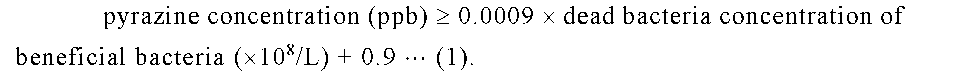 pyrazine concentration (ppb) ≥ 0.0009 × dead bacteria concentration of beneficial bacteria (×108/L) + 0.9 ··· (1). (1)

7. The beverage according to claim 1, wherein the pyrazine includes at least one of 2-methylpyrazine, 2,5-dimethylpyrazine, and 2,6-dimethylpyrazine.

8. The beverage according to any one of claims 1 to 7, wherein the beverage is any one of a coffee beverage, a green tea beverage, a black tea beverage, and a grain tea beverage.

9. The beverage according to any one of claims 1 to 7, wherein the beverage is a packaged beverage.

10. A method of producing a beverage that contains dead bacteria of beneficial bacteria, the method comprising a blending step of blending the dead bacteria of the beneficial bacteria and a pyrazine, wherein the blending is performed such that a dead bacteria concentration of the beneficial bacteria is 5 × 10⁸/L or more and a concentration of the pyrazine is 1 ppb or more.

11. The method of producing a beverage according to claim 10, comprising a heat treatment step of heat treating a blend obtained through the blending step.

12. A method of masking an off-odor of a beverage that contains dead bacteria of beneficial bacteria, the method comprising a blending step of blending the dead bacteria of the beneficial bacteria and a pyrazine, wherein the blending is performed such that a dead bacteria concentration of the beneficial bacteria is 5 × 10⁸/L or more and a concentration of the pyrazine is 1 ppb or more.

13. The method of masking an off-odor according to claim 12, comprising a heat treatment step of heat treating a blend obtained through the blending step.
